# EUROPEAN PATENT SPECIFICATION

(11) **EP 2 341 649 B1**
(45) Date of publication and mention of the grant of the patent: **19.09.2012**
(21) Application number: 10305001.9
(22) Date of filing: 04.01.2010
(51) Int. Cl.: H04J 3/06

(54) **Frequency synchronization method and system in a communication network**
Frequenzsynchronisierungsverfahren und -system in einem Kommunikationsnetzwerk
Procédé de synchronisation de la fréquence et système dans un réseau de communication

(43) Date of publication of application: 06.07.2011
(73) Proprietor: Alcatel Lucent, 75007 Paris (FR)
(72) Inventor: Le Pallec, Michel, 91620, Nozay (FR); Bui, Dinh Thai, 91620, Nozay (FR)
(74) Representative: Nicolle, Olivier

(56) References cited:
- EP-A2- 1 294 116
- US-A1- 2003 048 801
- US-A1- 2007 097 947

## Description

FIELD OF THE INVENTION

An aspect of the invention relates to a method of frequency synchronization, using a timestamp protocol, over a communication network between a server having a server clock and a client having a client clock. The method of frequency synchronization may be used, for example, in a Packet Switched Network (PSN). The synchronization of frequency is also called syntonization.

BACKGROUND OF THE INVENTION

A communication network like the packet switched network requires maintaining consistency among multiple time counters or clocks distributed among multiple devices, e.g. server, router, switch, computer, etc... As a consequence of clocks drifts, clocks of said devices differ from each other after a certain variable delay. Thus, various frequency synchronization methods have been developed, and are for example described in the IEEE 1588 V2 standard for a precision clock synchronization protocol for networked measurement and control systems, and in the IETF Network Time Protocol (NTP).

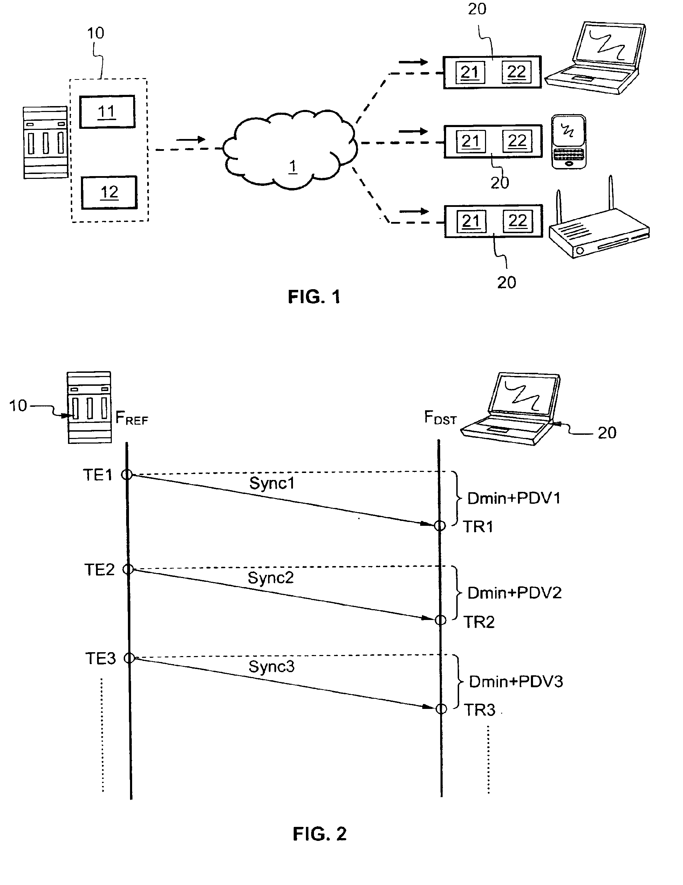

Figure 1 is a block diagram illustrating a server 10 communicating with clients 20 via a communication network 1. The server 10 comprises a processing unit 11 and a server clock 12. The server 10 may be further coupled to the communication network 1 via a node (not represented), for example a router, a switch, a gateway, a wireless access point, etc.... The client servers 20 comprise a processing unit 21 and a client clock 22. The clients 20 may be for example a router, a switch, a gateway, a base station, a wireless access point, a desktop computer, a laptop computer, a personal digital assistant, a mobile smart phone, a VolP (Voice over Internet Protocol) phone, another server, etc.... The communication between the server 10 and clients 20 can be wireline, or wireless, or a combination of both. The communication network 1 is a packet switched network PSN, for example Ethernet, IP, PBT, MPLS, etc...

Figure 2 schematically illustrates a method of frequency synchronization. The server clock 12 of the server 10 has a reference frequency F_{REF}. The client clock 22 of the client 20 has a destination frequency F_{DST}. According to the depicted method of frequency synchronization, the server 10 sends synchronization messages to the clients 20. Each synchronization message corresponds to a timing packet signal. The synchronization messages Sync1, Sync2, Sync3 are sent at the emission times TE1, TE2, TE3, respectively. These correspond to the reference frequency F_{REF} of the server clock 12 of the server 10. The synchronization messages Sync1, Sync2, Sync3 are received by the client 20 at the reception times TR1, TR2, TR3, respectively. The transmission delays of the synchronization messages Sync1, Sync2, Sync3 between the server and the client correspond to the sum of a minimum delay Dmin and a packet delay variation PDV1, PDV2, PDV3, respectively. The client estimates the frequency deviation F_{DST} - F_{REF} between the destination frequency F_{DST} and the reference frequency F_{REF} by measuring the inter-arrival time between the consecutive synchronization messages, and a ranging process. Then the client clock is disciplined according to the estimated frequency deviation.

This method of frequency synchronization is a "push" frequency synchronization approach because the synchronization messages follow the downstream direction, namely from the server to the client according to the network hierarchy. It enables distributing the reference frequency F_{REF} of the server 10 in a multicast way, i.e. the same synchronization message is simultaneously sent to a plurality of clients 20.

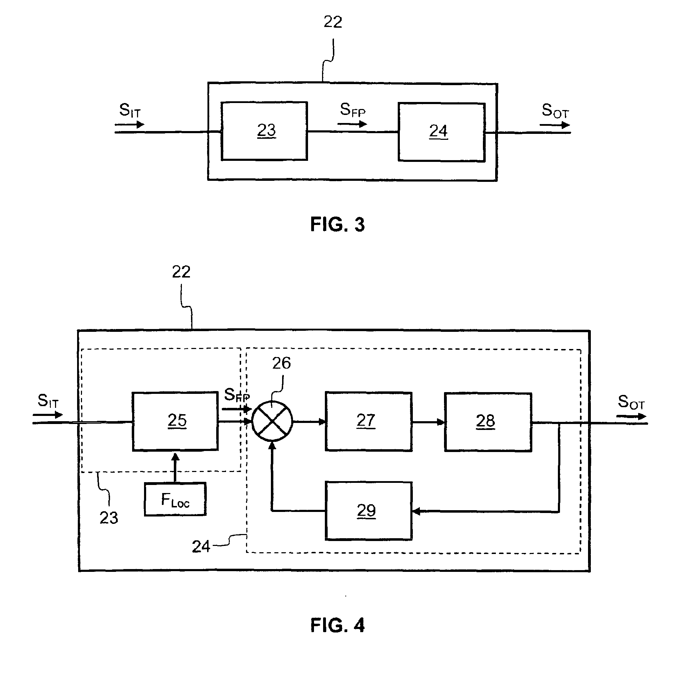

Figure 3 is a block diagram illustrating a client clock 22 under the form of a timing packet clock. Typically, the client clock 22 has a two-stage architecture comprising a packet filtering module 23 and a clock discipline module 24. The packet filtering module 23 receives the synchronization message under the form of an input timing packet signal S_{IT} and provides a filtered packet signal S_{FP} to the clock discipline module 24. The clock discipline module 24 provides an output timing signal S_{OT}.

Figure 4 schematically illustrates an example of implementation of the timing packet clock 22 of Figure 3.

The packet filtering module 23 performs the ranging process, also called a timing packet selection process. It comprises a timing packet selector 25 that selects the most relevant timing packets and stores the corresponding inter-arrival times in order to determine the time interval between two successive timing packets. The assessment of the inter-arrival times directly depends on the frequency stability and the period resolution of the local reference frequency F_{LOC} provided by the local client clock.

The time interval enables determining the transmission frequency of the timing packets by the server 10. The timing packet selection process is usually performed by algorithms like the Moving Average MA or the Exponentially Weighted Moving Average EWMA. The MA algorithm computes means, while the EWMA algorithm computes weighted means on a limited set of stored inter-arrival times. The MA algorithm requires a large number of registers to achieve low jitter levels in the recovered clock signal. The EWMA algorithm partially solves this issue at the expense of its robustness considering the different kind of perturbations affecting the packet inter-arrival time determination (e.g. packet delay correlation).

The clock discipline module 24 is dedicated to disciplining the client clock oscillator. The clock discipline module 24 is a phase locked loop clock counter comprising a time scale comparator 26, a low pass filter 27, an oscillator 28, and a local time scale 29. The low pass filter 27 cut-off frequency determines the convergence time and stability of the clock discipline module 24.

The measurement of the inter-arrival times by the packet filtering module 23 also depends on the clock discipline module 24. Indeed, the output frequency of the clock discipline module 24 is generally used by the packet filtering module 23 as the local reference frequency F_{LOC} for measuring the inter-arrival times.

With the hereinbefore described frequency synchronization method and system, and taking into consideration standard values, namely:
- a frequency accuracy/stability around 16 ppb;
- a low pass filtering frequency for the phase locked loop of 10 mHz or above;
- a timing packet rate around 32 packets/s;
- the packet delay variation at the output of the packet filtering module 23 remaining below 18 µs;
the packet filtering module 23 comprises a high number of registers in order to achieve this performance, namely more than three-hundred-thousand registers. This is clearly incompatible with low-cost clocks. Further, low-cost clocks with lower number of registers are not able to meet the stability requirements for high packet delay variation scenarios. Thus, the hereinbefore described frequency synchronization method and system are not satisfactory because reasonable expected performances can only be obtained with costly electronic components.

It has been proposed to increase the timing packet rate up to, for example, 128 packets/s in order to theoretically relax clock constraints. However, this solution is not acceptable because of the consumed bandwidth. A packet rate of 128 packets/s means a bit-rate of 0.5 Mbit/s, which is not satisfactory for low bit rate transmission links. Further, by increasing the packet rate, other issues related to packet correlation appear and degrade the expected performance.

The document US 2007/0097947 describes a technique for clock recovery in a network having master and slave docks in respective Time Division Multiplexing ("TDM") network segments which are interconnected by a non-TDM segment. Master clock timestamps are sent to the slave. The slave measures a master clock timestamp inter-arrival interval, and sends slave clock timestamps to the master. The master measures a slave clock timestamp inter-arrival interval, and sends that slave clock timestamp inter-arrival interval to the slave. The slave then calculates an error signal based at least in-part on the difference between the master clock timestamp inter-arrival interval and the slave clock timestamp inter-arrival interval, and employs the difference to recover the first service clock in the second TDM segment.

### SUMMARY OF THE INVENTION

It is an object of the invention to propose a method and/or a system of frequency synchronization in a communication network that overcomes one or more of the limitations of the existing frequency synchronization method and/or system.

The method and/or the system of frequency synchronization in a communication network of the invention proposes a "pull" frequency synchronization approach and not the "push" frequency synchronization approach of the known method and/or system.

According to one aspect of the invention, there is provided a method of frequency synchronization over a communication network between a server having a server clock and a client having a client clock, the server clock having a reference frequency, the client clock having a destination frequency, the method comprising:
- periodically sending a synchronization message from the client to the server according to the destination frequency of the client clock;
- receiving synchronization messages at the server at a plurality of arrival times determined by the server clock;
- calculating inter-arrival times based on the arrival times of the synchronization messages at the server and estimating a frequency deviation based on said inter-arrival times and the reference frequency;
- sending an advertise message comprising the frequency deviation from the server to the client; and
- adjusting the client clock based on the frequency deviation.

The step of estimating a frequency deviation may comprise calculating the frequency deviation by means of a packet delay variation based algorithm.

The step of sending an advertise message may be performed according to a sending rate statically configured with respect to the client clock stability. Alternatively, the step of sending an advertise message may be performed after a determined number of synchronization messages have been received at the server.

The step of sending an advertise message may comprise sending an encrypted advertise message and further comprise sending a follow-up message including authentication information. Alternatively, the step of sending an advertise message may comprise sending a clear advertise message and further comprise sending a follow-up message including integrity information.

The step of adjusting the client clock may comprise locking the destination frequency on the reference frequency by means of a convergence or a discipline algorithm.

According to another aspect of the invention, there is provided a system of frequency synchronization over a communication network between a server having a server clock and a client having a client clock, the server clock having a reference frequency, the client clock having a destination frequency, the system is **characterized in that**:
- the client is arranged to periodically send a synchronization message to the server according to the destination frequency of the client clock;
- the server is arranged to receive the synchronization messages at a plurality of arrival times determined by the server clock, to calculate inter-arrival times based on the arrival times of the synchronization messages at the server, to estimate a frequency deviation based on said inter-arrival times and the reference frequency, and to send an advertise message comprising the frequency deviation to the client; and
- the client clock is arranged to adjust the destination frequency based on the frequency deviation.

The communication network is a packet switched network PSN.

The method and/or the system of frequency synchronization in a communication network of the invention take advantage of the stability and accuracy of the server clock for the ranging process. Thus, having a highly stable clock at the client level is not anymore necessary. Further, the invention could improve the frequency accuracy and stability at the client level in difficult conditions such as network congestion and high packet delay variation in the downstream server to client direction. Other advantages will become apparent from the hereinafter description of the invention.

BRIEF DESCRIPTION OF THE DRAWINGS

The present invention is illustrated by way of examples and not limited to the accompanying drawings, in which like references indicate similar elements:
- Figure 1 is a block diagram illustrating a server and clients connected together through a communication network;
- Figure 2 schematically illustrates a method of frequency synchronization according to the prior art;
- Figures 3 and 4 are block diagrams illustrating a timing packet clock; and
- Figures 5 and 6 schematically illustrate a method of frequency synchronization according to the invention.

DETAILED DESCRIPTION OF THE INVENTION

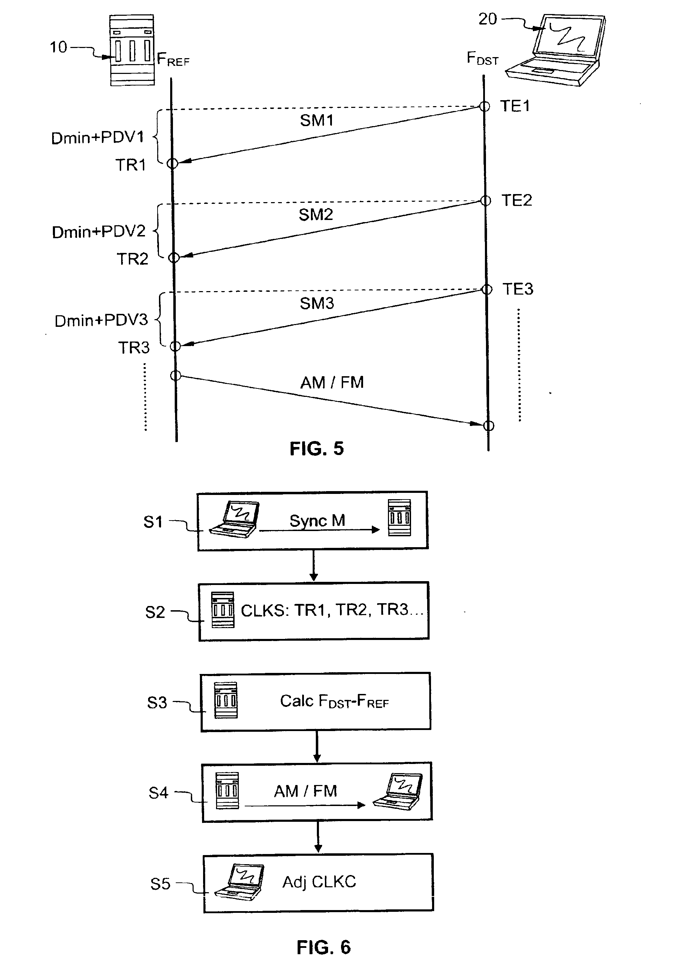

Figures 5 and 6 illustrate a method of frequency synchronization of the invention over a communication network 1 between a server 10 having a server clock 12 and a client 20 having a client clock 22.

The server clock 12 of the server 10 has a reference frequency F_{REF}. The client clock 22 of the client 20 has a destination frequency F_{DST}.

According to the frequency synchronization of the invention, the client 20 sends to the server 10 the time-stamped information, i.e. message departure time in a synchronization message. The server performs the ranging process instead of the client as in the hereinbefore described standard method. The ranging process is performed by means of the server clock 12 which is a clock having far better performance in term of accuracy and stability than the client clocks 22. The server calculates the frequency deviation value and transmits it to the client clock in order to lock its local frequency to the server one.

More precisely, in a first step S1, the client 20 sends synchronization messages to the server 10. Each synchronization message corresponds to a timing packet signal. The synchronization messages SM1, SM2, SM3 are sent at the emission times TE1, TE2, TE3, respectively. These messages are related to the destination frequency F_{DST} of the client clock 22 of the client 20.

Typically, each client 20 is referenced with a network address, for example a MAC address or an IP address, and all the addresses of the clients are pre-provisioned at the server 10. Thus, as each client 20 sends a synchronization message to the server 10 according to an Unicast mode, the server 10 can identify from which specific client 20 a synchronization message is related by means of said network address included in the synchronization messages.

Then, in a second step S2, the synchronization messages SM1, SM2, SM3 are received by the server 20 at the arrival times TR1, TR2, TR3, respectively. The transmission delays of the synchronization messages SM1, SM2, SM3 between the client and the server correspond to the sum of a minimum delay Dmin and a packet delay variation PDV1, PDV2, PDV3, respectively. The method of the invention could also take advantage of the fact that synchronization messages sent from the client towards the server are packets that may demonstrate low packet deviation variation comparatively to the reverse direction. The arrival times are determined based on the server clock.

Then, in a third step S3, the frequency deviation F_{DST} - F_{REF} between the destination frequency F_{DST} and the reference frequency F_{REF} is estimated. The server determines the frequency deviation F_{DST} - F_{REF} between the destination frequency F_{OST} and the reference frequency F_{REF} by measuring the inter-arrival time between the consecutive synchronization messages. The frequency deviation can be calculated by means of a packet delay variation based filtering algorithm, for example a MAPDV2 Mean Absolute Packet Delay Variation version 2 algorithm, or a Minimum Time DEViation MinTDEV algorithm (selection of packets experiencing a minimum delay), or a Band Time DEViation BandTDEV algorithm (selection of packets per delay windows), etc...

Then, in a fourth step S4, the server 10 sends an advertise message AM including the frequency deviation F_{DST} - F_{REF} to the client 20. The advertise message sending rate should be statically configured with respect to the client clock stability. In a more dynamic scheme, the advertise message may be sent each time a determined number of synchronization messages have been received from the server. As an example, the advertise message could be sent at a rate of one message per second or even higher with respect to the stability of the client clock. The fact that the packet selection is not performed at the client level greatly relaxes the message rate. The advertise message may have a far lower packet rate than the synchronization message one. Thus, the consumed bandwidth of the frequency synchronization method of the invention is quite similar with the consumed bandwidth of the standard frequency synchronization methods.

Advantageously, the server 10 sends the advertise message AM to the network address related to the specific client 20 for which the frequency deviation has been determined (Unicast mode). Thus, this specific client receives a frequency deviation information specifically dedicated to the adjustment of its clock.

Optionally, the advertise message may be followed by a follow-up message FM comprising authentication information of the server. In this case, the advertise message AM is encrypted for security reasons, and the follow-up message FM is a clear message carrying an encryption private key for authentication purpose. The advertise message may be followed by a follow-up message FM comprising integrity information of the server. In this case, the advertise message AM is a clear message, and the follow-up message FM carries an encoded check sum enabling the client to control the integrity of the information contained in the advertise message.

Then, in a fifth step S5, the client clock is adjusted based on the frequency deviation F_{DST} - F_{REF} received with the advertise message AM. The adjustment of the client clock may comprise locking the destination frequency F_{DST} on the reference frequency F_{REF} by means of a convergence or a discipline algorithm based on the received frequency deviation F_{DST} - F_{REF} information. The client can strictly and abruptly changes the client clock frequency according to the received frequency difference information. Alternatively, the client can monitor the client clock change by using a weighted approach, for example only 10% of the frequency deviation is really taken into account each time a advertise message is received.

Although in the hereinbefore description, the terminology "server" and "client" have been used, what matter is the hierarchy existing between these entities, the terminology "master" and "slave" should have been used in a similar manner.

The drawings and their description hereinbefore illustrate rather than limit the invention. Although a drawing shows different functional entities as different blocks, this by no means excludes implementations in which a single entity carries out several functions, or in which several entities carry out a single function. In this respect, the drawings are very diagrammatic.
Any reference sign in a claim should not be construed as limiting the claim. The word "comprising" does not exclude the presence of other elements than those listed in a claim. The word "a" or "an" preceding an element does not exclude the presence of a plurality of such element.

## Claims

1. A method of frequency synchronization, over a communication network (1) between a server (10) having a server clock (12) and a client (20) having a client clock (22), the server clock (12) having a reference frequency (F_{REF}), the client clock (22) having a destination frequency (F_{DST}), the method comprising:
- periodically sending (S1) a synchronization message (SM1, SM2, SM3) from the client (20) to the server (10) according to the destination frequency (F_{DST}) of the client clock (22);
- receiving (S2) synchronization messages (SM1, SM2, SM3) at the server at a plurality of arrival times (TR1, TR2, TR3) determined by the server clock (12);
- calculating (S3) inter-arrival times based on the arrival times (TR1, TR2, TR3) of the synchronization messages at the server;
**characterized in that** the method further comprises:
- estimating at the server a frequency deviation (F_{REF} - F_{DST}) based on said inter-arrival times (TR1, TR2, TR3) and the reference frequency (F_{REF});
- sending (S4) an advertise message (AM) comprising the frequency deviation (F_{REF} - F_{DST}) from the server (10) to the client (20); and
- adjusting (S5) at the client the client clock (22) based on the frequency deviation (F_{REF} - F_{DST}).

2. The method of frequency synchronization of claim 1, wherein the step of estimating a frequency deviation (F_{REF} - F_{DST}) comprises calculating the frequency deviation by means of a packet delay variation based algorithm.

3. The method of frequency synchronization according to claim 1 or 2, wherein the step of sending an advertise message (AM) is performed after a determined number of synchronization messages (SM1, SM2, SM3) have been received at the server (10).

4. The method of frequency synchronization according to claim 1 or 2, wherein the step of sending an advertise message (AM) is performed according to a sending rate statically configured with respect to the client clock stability.

5. The method of frequency synchronization according to anyone of the claims 1 to 4, wherein the step of sending an advertise message (AM) comprises sending an encrypted advertise message and further comprises sending a follow-up message (FM) comprising authentication information.

6. The method of frequency synchronization according to anyone of the claims 1 to 4, wherein the step of sending an advertise message (AM) comprises sending a clear advertise message and further comprises sending a follow-up message (FM) comprising integrity information.

7. The method of frequency synchronization according to anyone of the claims 1 to 6, wherein the step of adjusting the client clock (22) comprises locking the destination frequency (F_{DST}) on the reference frequency (F_{REF}) by means of a convergence or a discipline algorithm.

8. A system of frequency synchronization over a communication network (1) between a server (10) having a server clock (12) and a client (20) having a client clock (22), the server clock (12) having a reference frequency (F_{REF}), the client clock (22) having a destination frequency (F_{DST}), the system is **characterized in that**:
- the client (20) is arranged to periodically send a synchronization message (SM1, SM2, SM3) to the server (10) according to the destination frequency (F_{DST}) of the client clock (22);
- the server (10) is arranged to receive the synchronization messages (SM1, SM2, SM3) at a plurality of arrival times (TR1, TR2, TR3) determined by the server clock (12), to calculate inter-arrival times based on the arrival times (TR1, TR2, TR3) of the synchronization messages at the server,
**characterized in that** the server is further arranged to estimate a frequency deviation (F_{REF} - F_{DST}) based on said inter-arrival times (TR1, TR2, TR3) and the reference frequency (F_{REF}), and to send an advertise message (AM) comprising the frequency, deviation (F_{REF} - F_{DST}) to the client (20); and **in that** the client clock (22) is arranged to adjust the destination frequency (F_{DST}) based on the frequency deviation (F_{REF} - F_{DST}).

9. The system of frequency synchronization of claim 8, wherein the communication network (1) is a packet switched network PSN.

## Patentansprüche

1. Verfahren zur Frequenzsynchronisation, über ein Kommunikationsnetzwerk (1), zwischen einem Server (10) mit einem Server-Takt (12) und einem Client (20) mit einem Client-Takt (22), wobei der Server-Takt (12) eine Bezugsfrequenz (F_{REF}) und der Client-Takt (22) eine Zielfrequenz (F_{DST}) aufweist, wobei das Verfahren umfasst:
- Periodisches Senden (S1) einer Synchronisationsnachricht (SM1, SM2, SM3) vom Client (20) an den Server (10) gemäß der Zielfrequenz (F_{DST}) des Client-Taktes (22);
- Empfangen (S2) von Synchronisationsnachrichten (SM1, SM2, SM3) am Server zu einer Mehrzahl von von dem Server-Takt (12) bestimmten Ankunftszeiten (TR1, TR2, TR3);
- Berechnen (S3) von Ankunftszwischenzeiten auf der Basis der Ankunftszeiten (TR1, TR2, TR3) der Synchronisationsnachrichten am Server;
**dadurch gekennzeichnet, dass** das Verfahren weiterhin umfasst:
- Schätzen, am Server, einer Frequenzabweichung (F_{REF} - F_{DST}) auf der Basis der besagten Ankunftszwischenzeiten (TR1, TR2, TR3) und der Bezugsfrequenz (F_{REF});
- Senden (S4) einer Advertise-Nachricht (AM), welche eine Frequenzabweichung (F_{REF} - F_{DST}) enthält, vom Server (10) an den Client (20); und
- Anpassen (S5), am Client, des Client-Taktes (22) auf der Basis der Frequenzabweichung (F_{REF} - F_{DST}).

2. Verfahren zur Frequenzsynchronisation nach Anspruch 1, wobei der Schritt des Schätzens einer Frequenzabweichung (F_{REF} - F_{DST}) das Berechnen der Frequenzabweichung anhand eines auf der Paketverzögerungsveränderung basierenden Algorithmus umfasst.

3. Verfahren zur Frequenzsynchronisation nach Anspruch 1 oder 2, wobei der Schritt des Sendens einer Advertise-Nachricht (AM) durchgeführt wird, nachdem eine bestimmte Anzahl von Synchronisationsnachrichten (SM1, SM2, SM3) am Server (10) empfangen wurde.

4. Verfahren zur Frequenzsynchronisation nach Anspruch 1 oder 2, wobei der Schritt des Sendens einer Advertise-Nachricht (AM) gemäß einer in Bezug auf die Stabilität des Client-Taktes statisch konfigurierten Senderate durchgeführt wird.

5. Verfahren zur Frequenzsynchronisation nach einem beliebigen der Ansprüche 1 bis 4, wobei der Schritt des Sendens einer Advertise-Nachricht (AM) das Senden einer verschlüsselten Advertise-Nachricht umfasst, und weiterhin das Senden einer Follow-Up-Nachricht (FM), welche Authentifizierungsinformationen enthält, umfasst.

6. Verfahren zur Frequenzsynchronisation nach einem beliebigen der Ansprüche 1 bis 4, wobei der Schritt des Sendens einer Advertise-Nachricht (AM) das Senden einer klaren Advertise-Nachricht umfasst, und weiterhin das Senden einer Follow-Up-Nachricht (FM), welche Integritätsinformationen enthält, umfasst.

7. Verfahren zur Frequenzsynchronisation nach einem beliebigen der Ansprüche 1 bis 6, wobei der Schritt des Anpassens des Client-Taktes (22) das Einstellen der Zielfrequenz (F_{DST}) auf die Bezugsfrequenz (F_{REF}) anhand eines Konvergenz- oder eines Disziplin-Algorithmus umfasst.

8. System zur Frequenzsynchronisation über ein Kommunikationsnetzwerk (1) zwischen einem Server (10) mit einem Server-Takt (12) und einem Client (20) mit einem Client-Takt (22), wobei der Server-Takt (12) eine Bezugsfrequenz (F_{REF}) und der Client-Takt (22) eine Zielfrequenz (F_{DST}) aufweist, wobei das System **dadurch gekennzeichnet ist, dass**:
- Der Client (20) für das periodische Senden einer Synchronisationsnachricht (SM1, SM2, SM3) an den Server (10) gemäß einer Zielfrequenz (F_{DST}) des Client-Taktes (22) ausgelegt ist;
- der Server (10) für den Empfang der Synchronisationsnachrichten (SM1, SM2, SM3) zu einer Mehrzahl von von dem Server-Takt (12) bestimmten Ankunftszeiten (TR1, TR2, TR3) und für das Berechnen von Ankunftszwischenzeiten auf der Basis der Ankunftszeiten (TR1, TR2, TR3) der Synchronisationsnachrichten am Server ausgelegt ist,
**dadurch gekennzeichnet, dass** der Server weiterhin für das Schätzen einer Frequenzabweichung (F_{REF} - F_{DST}) auf der Basis der besagten Ankunftszwischenzeiten (TR1, TR2, TR3) und der Bezugsfrequenz (F_{REF}) und für das Senden einer Advertise-Nachricht (AM), welche die Frequenzabweichung (F_{REF} - F_{DST}) enthält, an den Client (20), ausgelegt ist; und
dass der Client-Takt (22) für das Anpassen der Zielfrequenz (F_{DST}) auf der Basis der Frequenzabweichung (F_{REF} - F_{DST}) ausgelegt ist.

9. System zur Frequenzsynchronisation nach 8, wobei das Kommunikationsnetzwerk (1) ein paketvermitteltes Netzwerk PSN ist.

## Revendications

1. Procédé de synchronisation de fréquence, sur un réseau de communication (1) entre un serveur (10) présentant une horloge de serveur (12) et un client (20) présentant une horloge client (22), l'horloge de serveur (12) présentant une fréquence de référence (F_{REF}), l'horloge client (22) présentant une fréquence de destination (F_{DST}), le procédé comprenant les étapes suivantes :
- envoyer périodiquement (S1) un message de synchronisation (SM1, SM2, SM3) depuis le client (20) vers le serveur (10) conformément à la fréquence de destination (F_{DST}) de l'horloge client (22) ;
- recevoir (S2) des messages de synchronisation (SM1, SM2, SM3) au niveau du serveur à une pluralité de temps d'arrivée (TR1, TR2, TR3) déterminés par l'horloge de serveur (12) ;
- calculer (S3) des temps entre les arrivées sur la base des temps d'arrivée (TR1, TR2, TR3) des messages de synchronisation au niveau du serveur ;
**caractérisé en ce que** le procédé comprend en outre les étapes suivantes:
- estimer au niveau du serveur un écart de fréquence (F_{REF} - F_{DST}) sur la base desdits temps entre les arrivées (TR1, TR2, TR3) et de la fréquence de référence (F_{REF}) ;
- envoyer (S4) un message d'annonce (AM) comprenant l'écart de fréquence (F_{REF} - F_{DST}) entre le serveur (10) et le client (20) ; et
- régler (S5) au niveau du client l'horloge client (22) sur la base de l'écart de fréquence (F_{REF} - F_{DST}).

2. Procédé de synchronisation de fréquence selon la revendication 1, dans lequel l'étape d'estimation d'un écart de fréquence (F_{REF} - F_{DST}) comprend le calcul de l'écart de fréquence au moyen d'un algorithme basé sur une variation de retard de paquet.

3. Procédé de synchronisation de fréquence selon la revendication 1 ou 2, dans lequel l'étape d'envoi d'un message d'annonce (AM) est exécutée après qu'un nombre déterminé de messages de synchronisation (SM1, SM2, SM3) ont été reçus au niveau du serveur (10).

4. Procédé de synchronisation de fréquence selon la revendication 1 ou 2, dans lequel l'étape d'envoi d'un message d'annonce (AM) est exécutée conformément à un débit d'envoi configuré de manière statique par rapport à la stabilité de l'horloge client.

5. Procédé de synchronisation de fréquence selon l'une quelconque des revendications 1 à 4, dans lequel l'étape d'envoi d'un message d'annonce (AM) comprend l'envoi d'un message d'annonce crypté et comprend en outre l'envoi d'un message de suivi (FM) comprenant des informations d'authentification.

6. Procédé de synchronisation de fréquence selon l'une quelconque des revendications 1 à 4, dans lequel l'étape d'envoi d'un message d'annonce (AM) comprend l'envoi d'un message d'annonce clair et comprend en outre l'envoi d'un message de suivi (FM) comprenant des informations sur l'intégrité.

7. Procédé de synchronisation de fréquence selon l'une quelconque des revendications 1 à 6, dans lequel l'étape de réglage de l'horloge client (22) comprend le verrouillage de la fréquence de destination (F_{DST}) sur la fréquence de référence (F_{REF}) au moyen d'un algorithme de convergence ou de discipline.

8. Système de synchronisation de fréquence sur un réseau de communication (1) entre un serveur (10) présentant une horloge de serveur (12) et un client (20) présentant une horloge client (22), l'horloge de serveur (12) présentant une fréquence de référence (F_{REF}), l'horloge client (22) présentant une fréquence de destination (F_{DST}), le système étant **caractérisé en ce que** :
- le client (20) est conçu pour envoyer périodiquement un message de synchronisation (SM1, SM2, SM3) au serveur (10) conformément à la fréquence de destination (F_{DST}) de l'horloge client (22) ;
- le serveur (10) est conçu pour recevoir les messages de synchronisation (SM1, SM2, SM3) au niveau d'une pluralité de temps d'arrivée (TR1, TR2, TR3) déterminés par l'horloge de serveur (12), pour calculer des temps entre les arrivées sur la base des temps d'arrivée (TR1, TR2, TR3) des messages de synchronisation au niveau du serveur,
**caractérisé en ce que** le serveur est en outre conçu pour estimer un écart de fréquence (F_{REF} - F_{DST}) sur la base desdits temps entre les arrivées (TR1, TR2, TR3) et de la fréquence de référence (F_{REF}), et pour envoyer un message d'annonce (AM) comprenant l'écart de fréquence (F_{REF} - F_{DST}) au client (20) ; et
**en ce que** l'horloge client (22) est conçue pour régler la fréquence de destination (F_{DST}) sur la base de l'écart de fréquence (F_{REF} - F_{DST}).

9. Système de synchronisation de fréquence selon la revendication 8, dans lequel le réseau de communication (1) est un réseau à commutation de paquets PSN.
